# EUROPEAN PATENT APPLICATION

(11) **EP 0 838 614 A1**
(43) Date of publication of application: **29.04.1998**
(21) Application number: 97118433.8
(22) Date of filing: 23.10.1997
(51) Int. Cl.: F16H 61/36

(54) **Vehicle transmission control device**

(30) Priority: 25.10.1996 IT TO960872
(71) Applicant: ROLTRA MORSE S.p.A., 86077 Pozzilli (IT)
(72) Inventor: Ottino, Franco Giovanni, 56017 San Giuliano Terme (IT)
(74) Representative: Cerbaro, Elena

(57) **Abstract**

A control device (1, 1') for a vehicle transmission, having a supporting element (2) fittable to a vehicle body (3), and a shift unit (4, 5) connected to the supporting element (2), and which, when operated manually, transmits motion to the transmission; the supporting element (2) is fittable with both a first shift unit (4) for selecting a number of operating modes of an automatic transmission, and with a second shift unit (5) for selecting the gears of a manual transmission, and has first and second connecting means (52, 54, 55; 91, 93, 96) for respectively and selectively connecting the first and second shift units (4, 5) to the supporting element (2).

## Description

The present invention relates to a vehicle transmission control device.

Known control devices substantially comprise a supporting element fitted to a vehicle body element; and a shift unit connected to the supporting element, and which, when operated manually, transmits motion to the vehicle transmission.

As is known, shift units of automatic transmissions substantially comprise a gear lever rotating with respect to the supporting element about an axis crosswise to the traveling direction of the vehicle to select a number of transmission operating modes.

Manual transmission shift units are also known, which comprise a gear lever rotating with respect to the supporting element about two perpendicular axes to respectively select and engage the gears, e.g. by means of an intermediate element to which the gear lever is hinged about a first axis, and which is fitted to the supporting element so as to rotate about a second axis.

On account of the above structural differences in the shift units, each version requires the use of dedicated components, which means designing, producing and storing a large number of components, with all the disadvantages and expense this entails.

It is an object of the present invention to provide a vehicle transmission control device designed to overcome the aforementioned drawbacks typically associated with known devices.

According to the present invention, there is provided a control device for a vehicle transmission, comprising a supporting element fittable to a vehicle body, and a shift unit connected to said supporting element and which, when operated manually, transmits motion to said transmission; characterized in that said supporting element is designed to be fitted with both a first shift unit for selecting a number of operating modes of an automatic transmission, and a second shift unit for selecting the gears of a manual transmission; said supporting element comprising first and second connecting means for respectively and selectively connecting said first and second shift units to the supporting element.

Two preferred, non-limiting embodiments of the present invention will be described by way of example with reference to the accompanying drawings, in which:
Figure 1 shows a partially sectioned front view, with parts removed for clarity, of an automatic vehicle transmission control device in accordance with the present invention;
Figure 2 shows a partially sectioned side view, with parts removed for clarity, of the Figure 1 device;
Figure 3 shows a partially sectioned front view, with parts removed for clarity, of a manual vehicle transmission control device in accordance with the present invention;
Figure 4 shows a larger-scale, partially sectioned top plan view, with parts removed for clarity, of the Figure 3 device.

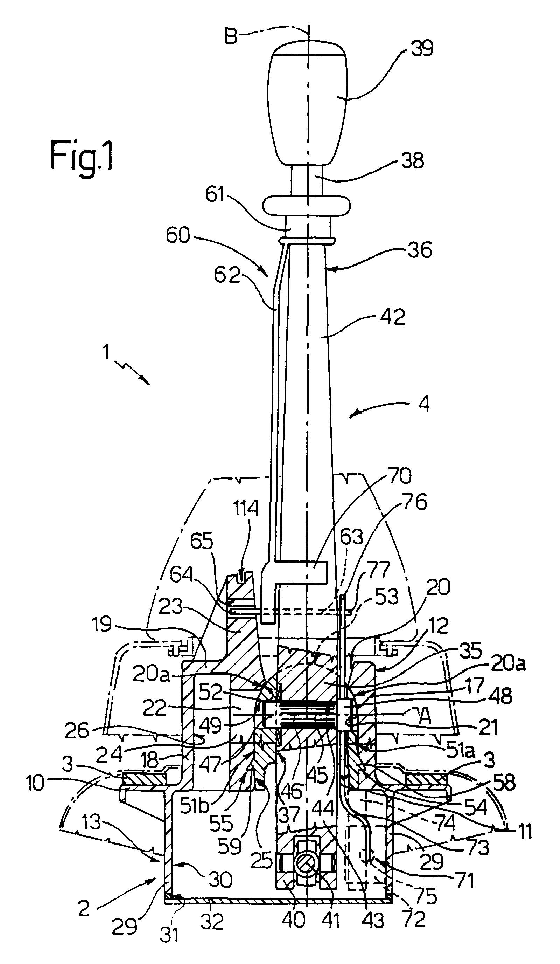

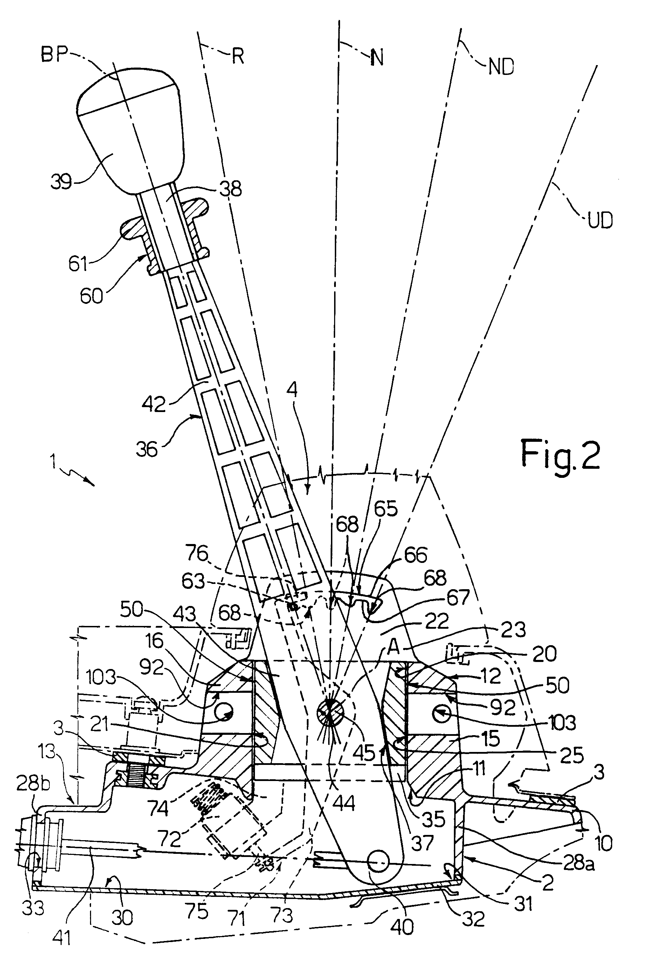

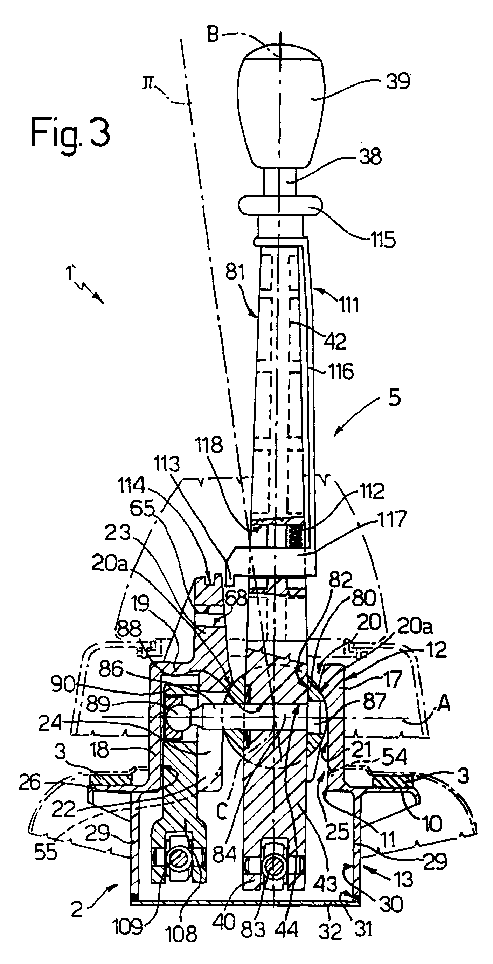

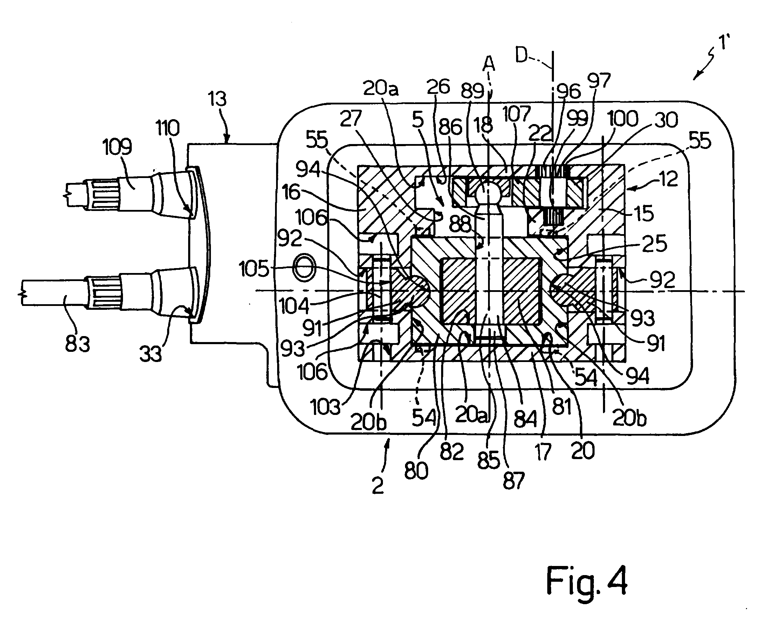

Number 1 in Figures 1 and 2 indicates a control device for an automatic vehicle transmission (not shown); and number 1' in Figures 3 and 4 indicates a control device for a manual vehicle transmission (not shown).

Each device 1, 1' substantially comprises a fixed, substantially box-shaped supporting element 2 connectable rigidly to a vehicle body element 3; and a respective shift unit 4, 5 connected to supporting element 2, and which, when operated manually, transmits motion to the respective transmission. More specifically, unit 4 provides for selecting a number of operating modes of the automatic transmission, and unit 5 for selecting and engaging the gears of the manual transmission.

According to the present invention, supporting element 2 is designed to be fitted with both shift unit 4 to form device 1, and with shift unit 5 to form device 1'; for which purpose, supporting element 2 comprises first and second connecting means - described in detail later on - for respectively and selectively connecting units 4, 5 to supporting element 2.

With reference to the accompanying drawings, supporting element 2 comprises a flange 10 for fitment to body element 3, and having, at an end portion, a substantially rectangular through opening 11; a substantially tubular top body 12 extending upwards from the edges of opening 11; and a bottom body 13 extending downwards from flange 10 and elongated in a longitudinal direction with respect to the vehicle.

Body 12 comprises a front and rear wall 15, 16 crosswise with respect to the vehicle; two lateral walls 17, 18 longitudinal with respect to the vehicle and crosswise to walls 15, 16; and a top wall 19 substantially in the form of a rectangular frame and having an opening 20. More specifically, opening 20 is defined by a pair of longitudinal edges 20a, and by a pair of transverse edges 20b; and walls 15, 16, 17, 18 and 19 define a first cavity 21 communicating externally at the top through opening 20.

Supporting element 2 also comprises an intermediate wall 22 located between walls 17 and 18, extending crosswise to wall 19 at a longitudinal edge 20a of opening 20, and comprising a top portion 23 outside supporting element 2, and a bottom portion 24 housed inside cavity 21 and defining respectively, with walls 17 and 18, a first seat 25 at opening 20, and a second seat 26 contiguous to seat 25. Portion 24 of wall 22 also comprises a through opening 27 (Figure 4) for connecting seats 25 and 26.

Body 13 comprises a front and rear wall 28a, 28b crosswise with respect to the vehicle; and two lateral walls 29 longitudinal with respect to the vehicle and crosswise to walls 28a, 28b; and walls 28a, 28b and 29 define a second cavity 30 communicating with cavity 21 through opening 11 and externally through a bottom opening 31 large enough to permit assembly of the members of units 4, 5. Body 13 also comprises a cover 32 for closing opening 31, and which faces flange 10 and is fitted to the bottom edges of walls 28a, 28b, 29 by means of a number of screws.

With reference to Figures 1 and 2, unit 4 comprises a substantially prismatic intermediate element 35 housed inside seat 25 of supporting element 2 and fitted to walls 17, 18 of body 12 by the first connecting means described later on; and a gear lever 36 extending loosely through opening 20, fitted to intermediate element 35, and rotating with respect to intermediate element 35 about an axis A crosswise to walls 17, 18 of body 12.

When rotated about axis A, lever 36 is set to a number of different shift positions indicated respectively in Figure 2 by axes P, R, N, ND, UD representing respective known operating modes of the automatic transmission. In the example shown, position P represents "parking" mode, position R "reverse gear" mode, position N "neutral" mode, position ND "normal drive" mode, and position UD "uphill drive" mode.

More specifically, lever 36 has an axis B perpendicular to axis A and crosswise to cover 32 of body 13, is fitted through a through opening 37 formed in intermediate element 35 and having an axis crosswise to cover 32, and comprises a top end 38 fitted integrally with a knob 39, and a substantially fork-shaped bottom end 40 housed inside cavity 30 and hinged to one end of a control cable 41 of the transmission. Cable 41 is a Bowden type, and comes out of supporting element 2 through a respective through seat 33 formed in wall 28b of body 13 (Figure 2).

Lever 36 also comprises a top portion 42 tapering towards knob 39; and a bottom portion 43 housed in sliding manner with a small amount of lateral clearance inside opening 37, and having a through hole 44, of axis A, defining a seat for a hinge pin 45 permitting rotation with respect to intermediate element 35.

Pin 45 comprises an intermediate portion 46 engaging hole 44 in gear lever 36 interferentially, so as to be connected rigidly to gear lever 36; and opposite axial end portions 47, 48 engaging in radially slack manner a hole 49, of axis A, formed in intermediate element 35 and intersecting opening 37.

Intermediate element 35 is defined externally by a flat front and rear surface 50 facing and contiguous to respective walls 15, 16 of body 12, and by two flat lateral faces 51a, 51b facing and contiguous to respective walls 17, 18 of body 12.

The first connecting means comprise a curved stop surface 52 defined by the inner surfaces of longitudinal edges 20a of opening 20, and defining a stop for a top surface 53, of conjugate shape, of intermediate element 35; a pair of identical first recesses 54 formed on the inner surface of wall 17 of body 12 and adjacent to opening 11 and to respective walls 15, 16; and a pair of second recesses 55 identical to recesses 54, formed on the inner surface of portion 24 of wall 22, and facing recesses 54. More specifically, each recess 54, 55 comprises, in cross section, a profile in the form of a right triangle.

Intermediate element 35 also comprises a pair of first triangular teeth 58 projecting outwards from face 51a and complementary in shape to respective recesses 54 of wall 17; and a pair of second triangular teeth 59 projecting outwards from lateral face 51b and complementary in shape to respective recesses 55 of wall 22. Teeth 58, 59 are designed to snap into respective recesses 54, 55 to hold surface 53 of intermediate element 35 against stop surface 52 of seat 25 and so fix intermediate element 35 to supporting element 2.

Unit 4 also comprises an element 60 for selectively enabling the operating modes of the automatic transmission, and which is fitted to lever 36 so as to slide axially between a raised position permitting rotation of lever 36 about axis A, and a lowered position maintaining lever 36 in the desired shift position, and is maintained in the lowered position by known elastic means (not shown) interposed between lever 36 and element 60 itself.

More specifically, element 60 comprises an actuating collar 61 fitted to lever 36 in axially sliding manner and adjacent to knob 39; an elongated arm 62 extending integrally from collar 61 along portion 42 of lever 36; and a cylindrical rod 63 connected integrally at an intermediate portion to the free end of arm 62, having an axis substantially parallel to axis A, and comprising an end portion 64 engaged in sliding manner inside a groove 65 formed in a front face of portion 23 of wall 22 and having a substantially comb-shaped profile.

More specifically, the profile of groove 65 is defined by a substantially straight top edge 66 elongated in a direction crosswise to walls 15, 16 of body 12, and by an undulated bottom edge 67 separated from edge 66 by a minimum distance equal to the diameter of rod 63, and defining a number of U-shaped grooves 68, each intersecting a respective axis P, R, N, ND, UD. When element 60 is set to the lowered position, end portion 64 of rod 63 engages a respective groove 68 of groove 65 corresponding to a desired shift position, and prevents rotation of lever 36 about axis A. Conversely, in the raised position, end portion 64 of rod 63 is detached from grooves 68 and engages edge 66 of groove 65 in sliding manner to permit rotation of lever 36 about axis A.

Element 60 also comprises an appendix 70 having a substantially C-shaped horizontal section, projecting from arm 62 close to rod 63, and fitted to lever 36 so as to slide along axis B.

Unit 4 also comprises a safety lock assembly 71 for locking lever 36 in the shift position defined by axis P (Figures 1 and 2) - hereinafter referred to simply as position P - and corresponding to "parking" mode. Assembly 71 comprises a known actuating member 72 housed inside cavity 30 of body 13 and activated in known manner by the vehicle brake pedal (not shown); and a lock lever 73 controlled by actuating member 72, fitted through opening 37 of intermediate element 35, and fitted to intermediate element 35 so as to rotate about axis A between a lock position (Figures 1 and 2), in which rod 63 is locked inside groove 68 corresponding to position P of lever 36, and element 60 is prevented from moving into the raised position, and a release position permitting element 60 to slide along lever 36.

More specifically, actuating member 72 is clicked onto a supporting arm 74 projecting into cavity 30 from flange 10, has an axis inclined with respect to cover 32, and comprises a rod 75 movable axially between a withdrawn position corresponding to the lock position of lever 73, and an extracted position corresponding to the release position of lever 73. When lever 36 is shifted into position P and the ignition key (not shown) is withdrawn from the instrument panel (not shown) of the vehicle, rod 75 is moved automatically in known manner into the withdrawn position to move lever 73 into the lock position.

Lever 73 comprises an intermediate portion hinged to portion 48 of pin 45; a substantially fork-shaped bottom end portion connected in known manner to a free end of rod 75; and a top end portion having an appendix 76 projecting transversely from lever 73. More specifically, when lever 73 is set to the release position, appendix 76 is detached from the mouth of groove 68 corresponding to position P of lever 36, and therefore permits end portion 64 of rod 63 to be inserted and withdrawn from groove 68. Conversely, when lever 73 is set to the lock position, appendix 76 is positioned on top of an end portion 77 of rod 63, opposite the end portion 64 engaged inside groove 68, thus preventing rod 63 from being released from groove 68.

With reference to Figures 3 and 4, unit 5 will now be described only insofar as it differs from unit 4, and using the same numbering system for any parts identical or corresponding to those already described.

Unit 5 differs from unit 4 by comprising a substantially cylindrical intermediate element 80, which has an axis C perpendicular to axes A and B and crosswise to walls 15, 16 of body 12, is housed inside seat 25 of supporting element 2, and is fitted to supporting element 2 so as to rotate about axis C. Unit 5 also comprises a gear lever 81 identical to lever 36 and fitted through intermediate element 80 so as to rotate about axis A.

Lever 81 therefore rotates, with respect to fixed supporting element 2, about axis A (movable with intermediate element 80) and about axis C (fixed); rotation of lever 81 about axis C provides for selecting the gears; rotation of lever 81 about axis A provides for engaging or disengaging the selected gear; and operation of lever 81 is transmitted to the vehicle transmission by relay means described later on.

Like lever 36, lever 81 is housed in sliding manner and with a small amount of lateral clearance inside a through opening 82 formed in intermediate element 80 and having an axis crosswise to cover 32, and is connected at end 40 to one end of a gear engagement/disengagement control cable 83 identical to cable 41, and which comes out of supporting element 2 through a seat 33 in wall 28b. Lever 81 is hinged to intermediate element 80 by a hinge pin 84, of axis A, similar to pin 45 and comprising an intermediate portion 85 engaging hole 44 in lever 81 interferentially so as to be rigidly connected to lever 81, and opposite axial end portions 86, 87 engaging in radially slack manner a hole 88, of axis A, formed in intermediate element 80 and intersecting opening 82.

One (86) of the axial end portions of pin 84 projects axially outwards of intermediate element 80 and through opening 27 in wall 22 to form a spherical end head 89, which acts as an articulating element for controlling a relay lever 90 housed inside seat 26 between wall 18 and portion 24 of wall 22.

More specifically, lever 90 is substantially in the form of a quadrant, and rotates with respect to supporting element 2 about an axis D perpendicular to axis C, crosswise with respect to the vehicle, and interposed between head 89 of pin 84 and wall 16.

The second connecting means comprise a pair of first pins 91, which are fitted, via releasable fastening means, inside respective through holes 92, of axis C, formed centrally in respective walls 15, 16 of body 12, and comprise respective substantially hemispherical end heads 93 engaging respective complementary cavities 94 formed externally in the lateral wall of intermediate element 80 to define respective hinges of axis C. The second connecting means also comprise a second pin 96 having an intermediate portion 97 engaging in sliding manner a through hole, of axis D, formed in lever 90, and knurled opposite axial end portions 99, 100 respectively smaller and larger in diameter than portion 97, and interferentially engaging respective holes, of axis D, formed respectively in portion 24 of wall 22 and in wall 18 of body 12.

More specifically, according to a preferred embodiment, each wall 15, 16 of body 12 also comprises a dead hole 103 having an axis perpendicular to axis C and to walls 17, 18, and intersecting respective hole 92; the releasable fastening means comprise, for each pin 91, a cylindrical pin 104 driven inside respective hole 103, and in turn comprising an intermediate portion engaging a hole 105 formed in respective pin 91, and opposite axial end portions engaging hole 103 interferentially to connect pin 91 rigidly to respective wall 15, 16.

Each wall 15, 16 also comprises a pair of recesses 106 formed on opposite sides of respective hole 92 to permit removal of respective pin 104 from supporting element 2.

Lever 90 comprises a first arm 107 extending substantially longitudinally with respect to the vehicle, and connected to head 89 of pin 84; and a second arm 108 extending substantially downwards, and having a substantially fork-shaped bottom end hinged to one end of a gear selection control cable 109. Cable 109 is a Bowden type, and comes out of supporting element 2 through a through seat 110 formed in wall 28b of body 13 and side by side with seat 33.

Unit 5 also comprises a disabling element 111 for preventing accidental engagement of the reverse gear, and which is fitted to lever 81 so as to slide axially between a lowered disabling position and a raised enabling position, and is maintained in the disabling position by a coil spring 112 interposed between lever 81 and element 111 itself.

More specifically, element 111 comprises a projection 113, which, in the raised position of element 111, engages a groove 114 formed on the top of portion 23 of wall 22, to permit lever 81 to be positioned and maintained in a reverse gear selection plane π through axis C. Conversely, in the lowered disabling position of element 111 and when lever 81 is rotated about axis C towards plane π, projection 113 interferes with an edge (not shown) of groove 114 to prevent lever 81 from being positioned in plane π.

Element 111 comprises an actuating collar 115 fitted in axially sliding manner to portion 42 of lever 81 and adjacent to knob 39; an elongated arm 116 integral with collar 115 and extending laterally from collar 115 along portion 42 of lever 81; and a body 117 comprising a substantially flat rectangular plate, and which projects integrally and perpendicularly from the end of arm 116 opposite collar 115, is fitted through a through opening 118 formed in lever 81 and having an axis perpendicular to axis B, and comprises projection 113 on the free end. More specifically, body 117 is housed inside opening 118 with sufficient clearance in the direction of axis B (Figure 3) to permit element 111 to slide between said disabling and enabling positions.

Device 1 operates as follows.

To select one of the automatic transmission operating modes, element 60 is moved into the raised position by means of collar 61, and, at the same time, lever 36 is rotated about axis A, which is permitted by portion 64 of rod 63 being brought into contact with and being permitted to slide in both directions along edge 66 of groove 65. On reaching the required shift position, collar 61 is simply released, so that element 60 is restored by said elastic means to the lowered position in which portion 64 of rod 63 engages groove 68 corresponding to the selected shift position.

When the vehicle is parked, lever 36 is set to shift position P; and withdrawal of the ignition key from the instrument panel automatically activates actuating member 72, which, by moving rod 75 axially into the withdrawn position, rotates lever 73 about axis A into the lock position. To pull away in parking mode, the brake pedal is activated to move rod 75 into the extracted position and so rotate lever 73 about axis A into the release position.

Device 1' operates as follows.

To select a gear, knob 39 of lever 81 is moved laterally to rotate lever 81, pin 84 integral with lever 81, and hence intermediate element 80 about axis C. When pin 84 is rotated about transverse axis C, spherical head 89 is moved up or down along an arc, and transmits motion to lever 90, which rotates about axis D to activate gear selection control cable 109.

On reaching the selected position, the corresponding gear is engaged by moving lever 81 backwards or forwards, so as to rotate lever 81 about axis A and activate engagement control cable 83.

To engage the reverse gear, lever 81 is rotated about axis C towards plane π, while at the same time drawing collar 115 towards knob 39 to move element 111 into the raised enabling position, so that projection 113 engages groove 114 to permit lever 81 to be positioned in plane π; and lever 81 is then rotated about axis A to engage the reverse gear.

The advantages of devices 1, 1' according to the present invention will be clear from the foregoing description.

In particular, the same supporting element 2 may be fitted with both unit 4 to form device 1, and with unit 5 to form device 1', thus reducing the production, tooling and storage costs involved in the manufacture of the supporting elements.

In the embodiment described of the invention, levers 36 and 81 are also identical.

Clearly, changes may be made to devices 1, 1' as described and illustrated herein without, however, departing from the scope of the accompanying Claims.

## Claims

1. A control device (1, 1') for a vehicle transmission, comprising a supporting element (2) fittable to a vehicle body (3), and a shift unit (4, 5) connected to said supporting element (2) and which, when operated manually, transmits motion to said transmission; characterized in that said supporting element (2) is designed to be fitted with both a first shift unit (4) for selecting a number of operating modes of an automatic transmission, and a second shift unit (5) for selecting the gears of a manual transmission; said supporting element (2) comprising first and second connecting means (52, 54, 55; 91, 93, 96) for respectively and selectively connecting said first and second shift units (4, 5) to the supporting element (2).

2. A device as claimed in Claim 1, characterized in that said first and second shift units (4, 5) respectively comprise first and second control means (35, 36; 80, 81) selectively housable inside a seat (25) formed in said supporting element (2); said first and second control means (35, 36; 80, 81) respectively comprising a first and a second gear lever (36, 81) identical to each other and rotating with respect to said supporting element (2) about at least a common first axis (A).

3. A device as claimed in Claim 2, characterized in that said first and second control means respectively comprise a first and a second intermediate element (35, 80) housed inside said seat (25) and fitted respectively with said first and said second gear lever (36, 81) in rotary manner about said first axis (A).

4. A device as claimed in Claim 3, characterized in that said first connecting means comprise a first stop surface (52) formed in said supporting element (2) and defining a stop for a second surface (53), of conjugate shape, of said first intermediate element (35); and first engaging means (54, 55) associated with said seat (25) and which snap onto second engaging means (58, 59) on said first intermediate element (35) to hold said second surface (53) against said first surface (52) and so fix said first intermediate element (35) to said supporting element (2).

5. A device as claimed in Claim 4, characterized in that said first engaging means comprise a number of recesses (54, 55) formed in said supporting element (2); and said second engaging means comprise a number of teeth (58, 59) formed on said first intermediate element (35) and which snap into said recesses (54, 55).

6. A device as claimed in any one of the foregoing Claims from 2 to 5, characterized in that said second control means (80, 81) rotate with respect to said supporting element (2) about a second axis (C) perpendicular to said first axis (A); said second shift unit (5) comprising a relay lever (90) rotating with respect to said supporting element (2) about a third axis (D) distinct from said first and second axes (A, C), and transmission means (84) interposed between said second control means (80, 81) and said relay lever (90) to rotate the relay lever (90) about said third axis (D) in response to rotation of said second control means (80, 81) about said second axis (C).

7. A device as claimed in Claim 6, characterized in that said second connecting means comprise hinge means (91, 93) associated with said seat (25) and connecting said second intermediate element (80) to said supporting element (2) in rotary manner about said second axis (C).

8. A device as claimed in Claim 7, characterized in that said hinge means comprise a pair of first pins (91) coaxial with said second axis (C), fitted releasably to said supporting element (2), located on opposite sides of said second intermediate element (80), and comprising respective substantially hemispherical end heads (93); said second intermediate element (80) comprising externally a pair of substantially hemispherical cavities (94) engaged by the respective heads (93) of respective said first pins (91).

9. A device as claimed in Claim 8, characterized in that said supporting element (2) comprises a pair of first walls (15, 16) crosswise to said second axis (C) and on opposite sides of said second intermediate element (80); each of said first walls (15, 16) comprising a through hole (92) coaxial with said second axis (C) and engaged releasably by a respective said first pin (91).

10. A device as claimed in any one of the foregoing Claims from 6 to 9, characterized in that said second connecting means comprise articulating means (96) for connecting said relay lever (90) to said supporting element (2) in articulated manner about said third axis (D).

11. A device as claimed in Claim 10, characterized in that said articulating means comprise a second pin (96) coaxial with said third axis (D), and comprising an intermediate portion (97) fitted in rotary manner in said relay lever (90), and opposite axial end portions (99, 100) connected integrally to said supporting element (2).

12. A device as claimed in any one of the foregoing Claims from 2 to 11, characterized in that said supporting element (2) comprises a first constraint element (65) having a number of engaging portions (68); said first shift unit (4) comprising a second constraint element (63) fitted to said first gear lever (36) and connectable selectively to each of said engaging portions (68) to set said first control lever (36) to respective shift positions (P, R, N, ND, UD) corresponding to respective operating modes of said automatic transmission.

13. A device as claimed in Claim 12, characterized in that said first shift unit (4) comprises a selective enabling element (60) for selectively enabling the operating modes of said automatic transmission; said selective enabling element (60) comprising said second constraint element (63), and being fitted to said first gear lever (36) so as to slide longitudinally between a lowered position, wherein said second constraint element (63) engages one of said engaging portions (68) and maintains said first gear lever (36) in the corresponding shift position (P, R, N, ND, UD), and a raised position, wherein said second constraint element (63) engages said first constraint element (65) but is detached from said engaging portions (68) to permit said first gear lever (36) to rotate about said first axis (A); said selective enabling element (60) normally being set to said lowered position.

14. A device as claimed in Claim 13, characterized in that said first constraint element is a first groove (65) formed in said supporting element (2) and having a substantially comb-shaped profile; and said second constraint element comprises a straight rod (63) having an end portion (64) fitted in sliding manner inside said first groove (65); said first groove (65) being defined by a substantially straight top edge (66), and by a substantially undulated bottom edge (67) defining a number of U-shaped seats (68); said U-shaped seats (68) defining said engaging portions.

15. A device as claimed in Claim 13 or 14, characterized in that said first shift unit (4) comprises safety locking means (71) for locking said first gear lever (36) in a first (P) of said shift positions (P, R, N, ND, UD) corresponding to a parking mode of said automatic transmission; said locking means (71) comprising an actuating member (72), and a lock lever (73) activated by said actuating member (72), housed inside said seat (25), and fitted to said first intermediate element (35) in rotary manner about said first axis (A); said lock lever (73) being movable between a lock position cooperating with said second constraint element (63) to lock said first gear lever (36) in said first shift position (P), and a release position detached from said second constraint element (63) and permitting rotation of said first gear lever (36) about said first axis (A); said supporting element (2) comprising supporting means (74) for supporting said actuating member (72).

16. A device as claimed in any one of the foregoing Claims from 6 to 15, characterized in that said supporting element (2) comprises a first engaging element (114) connectable to a second engaging element (113) on said second gear lever (81) to permit said second gear lever (81) to be positioned in a reverse gear selection plane (π) through said second axis (C), and to maintain the second gear lever (81) in said plane (π).

17. A device as claimed in Claim 16, characterized in that said second shift unit (5) comprises a disabling element (111) for disabling accidental engagement of the reverse gear, and which comprises said second engaging element (113) and is fitted to said second gear lever (81) so as to slide longitudinally between a disabling position wherein said first and second engaging elements (114, 113) interfere with each other as said second gear lever (81) is rotated about said second axis (C) towards said reverse gear selection plane (π), and an enabling position wherein said first and second engaging elements (114, 113) are connectable to each other as said second gear lever (81) is rotated about said second axis (C); said second shift unit (5) comprising elastic means (112) interposed between said second gear lever (81) and said disabling element (111) to maintain the disabling element (111) in said disabling position.

18. A device as claimed in Claim 17, characterized in that said first engaging element is a second groove (114) formed in said supporting element (2); and said second engaging element is a projection (113) formed on said disabling element (111) and for engaging said second groove (114).
